Europäisches Patentamt

European Patent Office

Office européen des brevets

(19)

(11) **EP 1 494 175 A1**

(12) **EUROPEAN PATENT APPLICATION**

(43) Date of publication:
**05.01.2005 Bulletin 2005/01**

(51) Int Cl.$^7$: **G06T 15/20**

(21) Application number: **03101961.5**

(22) Date of filing: **01.07.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Koninklijke Philips Electronics N.V.
5621 BA Eindhoven (NL)**

(72) Inventor: **The designation of the inventor has not yet been filed**

(74) Representative: **de Jong, Durk Jan et al
Philips
Intellectual Property & Standards
P.O. Box 220
5600 AE Eindhoven (NL)**

(54) **Selection of a mipmap level**

(57) A computer graphics system includes a texture memory (134) storing texture maps in a mipmap structure, texels in a texture map being specified by a pair of *u* and *v* coordinates. A rasterizer (120) determines for a texel $(u,v)$ corresponding initial 4D mipmap levels ($mml_u, mml_v$) and a magnification factor representing a magnification that occurs when the texel is mapped to a corresponding pixel position on the display. It then determines final 4D mipmap levels in dependence on the determined initial 4D mipmap levels $mml_u, mml_v$, and the magnification factor. A texture space resampler (132) obtains texture data from a texture map identified by the pair of final 4D mipmap levels. A texture mapper (140) maps the obtained texture data to corresponding pixel data defining the display image.

FIG.1

EP 1 494 175 A1

## Description

FIELD OF THE INVENTION

The invention relates to a computer graphics system and a method of computer graphics processing.

BACKGROUND OF THE INVENTION

An important element in rendering 3D graphics is texture mapping. Mapping textures onto surfaces of computer-generated objects is a technique which greatly improves the realism of their appearance. The texture is typically a 2D picture, such as a photograph or computer generated image. For example, (part of) a 2D image of a wall may be projected on a 3D representation of a wall in a computer game. Most 3D objects cover only a small part of the screen, often resulting in minification of the texture map (which is of sufficient resolution to also provide a reasonable appearance when viewed up close). Often, during texture mapping the 2D picture has to be minified considerably, for example if the wall is far removed. In principle, texture mapping could then be performed by significantly downscaling the original image. To reduce the bandwidth required for reading the high resolution 2D picture, a pre-processing step is often performed in which several downscaled versions of the 2D picture are created. During texture mapping, the part of only the smaller downscaled picture which matches best in resolution with the screen image is read and mapped to the screen. The original 2D picture along with its downscaled versions is called a mipmap. Texture mapping as well as mipmaps are particularly described in "Survey of Texture Mapping Paul S. Heckbert, IEEE Computer Graphics and Applications, Nov. 1986, pp. 56-67 and in U.S. 6,236,405 B1. In a mipmap, the original image is denoted as level 0. In level 1, each entry holds an averaged value of, for example, 2x2 texels. As used herein the term "texel" (texture element) refers to a picture element (pixel) of the texture. This can be continued until the top-level is reached, which has only one entry holding the average color of the entire texture. Thus, in a square mipmap, level $n$ has one fourth the size of level $n$-1. In the present specification, the term "texture" is used as a synonym for any image or structure to be mapped onto an object.

Several types of mipmaps are known, varying in which downscaled images are stored. In a 3D mipmap, both directions are downscaled by the same factors, while in a 4D mipmap the original image is downscaled independently in both dimensions. Compared to the 3D mipmap, the 4D mipmap arrangement requires a lot of memory to store. Computer graphics programs, such as games, therefore, often use the 3D mipmap structure. The non-prepublished European patent application with attorney docket number PHNL010924EPP filed as IB02/05468 describes a method for generating a 4D mipmap on the fly from a 3D mipmap. This enables high quality rendering also in combination with programs that do not supply a 4D mipmap to the graphics system.

In general, there are several methods known for mapping the (mipmapped) image onto the screen grid. Most conventional computer graphics systems use a so-called inverse texture mapping approach. In this approach, pixels of the screen are processed sequentially and for each pixel, during a rasterization process, a projection of the screen pixel on the texture (resulting in a pixel's "footprint") is determined and an average value which best approximates the correct pixel color is computed, usually in the form of a weighted average. An alternative approach is the so-called forward texture mapping method. This method works by traversing texels in the coordinate system defined by the texture map. The texel colors are then splatted to the screen pixels, using resamplers commonly used for video scaling.

A 2D or 3D object to be rendered is typically modeled using primitives (usually triangles). A vertex shader of the graphics system receives the vertices of a primitive as input and uses a vertex shading program to change or add attributes for each of these vertices. In a forward mapping system, a rasterizer then traverses the primitive in texture space while interpolating these attributes. The rasterizer accepts vertex coordinates which define vertices of triangles. The rasterizer computes texture coordinates $(u, v)$ for each texel to be projected to the triangle. For each grid position $(u, v)$ of the texture visited, the texel shader calculates from these attributes the local color of the surface of the primitive. These surface colors are then resampled to screen pixel locations by the screen space resampler. In a two-pass forward mapping approach, mapping of a 2D image is decomposed in two 1D mappings. First, the image is mapped in one direction, typically the scan line direction, i.e. in horizontal direction, then in the other direction. The first pass then processes complete scan lines and therefore the vertical mipmap level in the texture space rasterizer is fixed for the whole primitive (triangle) that is being rendered. The rasterizer indicates for a triangle the maximum amount of detail required, based on information for the vertices. To be able to still vary the horizontal mipmap level, the 4D mipmap arrangement is used. It is also possible to use a one-pass 2D filter and vary both the horizontal and vertical mipmap level. The supplied information includes a horizontal mipmap level $mml_u$ and a vertical mipmap level $mml_v$. The rasterizer processes the texels along the grid determined by these two 4D mipmap level values. A texture space resampler resamples data from the identified 4D mipmap to the texel position.

It is desired to make a well-considered choice of the mipmap to use. Choosing a too detailed mipmap generates too much memory bandwidth. Choosing a too coarse mipmap generates an image of too low quality. In particular, for a 2-pass forward texture mapping graphics system where the vertical mipmap level is fixed for the entire triangle on the basis of the maximum amount of detail required anywhere in the triangle, the risk of choosing a too detailed level is high.

SUMMARY OF THE INVENTION

It is an object of the invention to provide a method and system for choosing a mipmap level.

To meet the object of the invention, a computer graphics system for rendering an image for display includes:

- a texture memory for storing texture maps in a mipmap structure; texels in a texture map being specified by a pair of $u$ and $v$ coordinates;
- a rasterizer operative to, for a texel $(u, v)$,

  - determine corresponding initial 4D mipmap levels ($mml_u$, $mml_v$);
  - determine a magnification factor representing a magnification that occurs when the texel is mapped to a corresponding pixel position on the display; and
  - determine corresponding final 4D mipmap levels in dependence on the determined initial 4D mipmap levels $mml_u$, $mml_v$, and the magnification factor; and

- a texture space resampler for obtaining texture data from a texture map identified by the pair of final 4D mipmap levels;
- a texture mapper for mapping the obtained texture data to corresponding pixel data defining the display image.

The inventor has realized that, although the rasterizer operates on a grid determined by the initial 4D mipmap levels ($mml_u$, $mml_v$) (in a way that corresponds to the maximum amount of detail needed somewhere in the triangle), these values (as conventionally delivered by the rasterizer to the texture space resampler) may not be the ideal measure for choosing the texture from the mipmap structure: it may indicate a much more detailed level than is actually needed at a particular point within the triangle. This is particularly the case if the triangle is viewed under a high perspective. This causes a magnification to occur in one or both of the orthogonal directions of the grid. For example, a vertical magnification factor (the vertical direction is usually indicated by $v$) indicates for the current rasterization grid position how far apart on the screen two texels are that differ one in $v$ value in the vertical rasterization mipmap level $mml_v$. The magnification factor then influences the choice of mipmap level used for the texture space resampling. The system according to the invention may be used for inverse texture mapping systems as well as forward texture mapping systems.

According to the measure of the dependent claim 2, the vertical 4D mipmap level is adjusted depending on the vertical magnification. This combines well with a 2-pass graphics system where the rasterizer itself during the first pass operates with a fixed vertical 4D mipmap level for the entire triangle on the basis of the maximum amount of detail required anywhere in the triangle and a variable horizontal mipmap level. Such a conventional rasterizer already uses a horizontal 4D mipmap level that varies per texel. According to the invention, the rasterizer also determines per texel a final vertical 4D mipmap level for use by the texture space resampler by adjusting its initial vertical 4D mipmap level in dependence on the vertical magnification. All other operations of the rasterizer are not affected and can still operate with a fixed vertical 4D mipmap level.

According to the measure of the dependent claim 3, the mipmap level $mml_v$ is lowered if the magnification factor is small. In this case, a lower vertical resolution can be used. Conventionally, the vertical 4D mipmap levels supplied by the rasterizer represent the highest level of detail required for a texel within a primitive. In particular if the magnification factor is small (high perspective in that direction) a relatively large minification occurs in that direction, enabling the use of a 4D mipmap with less detail in that direction.

According the measures of the dependent claim 4, the texture memory stores a 4D mipmap structure. The texture space resampler operates on the 4D mipmap indicated by the finally determined levels (possibly with a lower resolution). The rasterizer still operates on the initial 4D mipmap (with possibly unnecessary high detail). The resampler provides the data to the rasterizer by reconstructing it from the finally identified 4D mipmap (e.g. through interpolation). In this way, bandwidth to the texture memory can be reduced at those texels where the quality does not suffer.

According the measures of the dependent claims 5, the texture memory stores a 3D mipmap structure, as is usually the case for computer graphics applications such as games. The texture space resampler generates the finally identified 4D mipmap on-the-fly from one of the 3D mipmaps. The non-prepublished European patent application IB02/05468 describes a method for generating a 4D mipmap on the fly from a 3D mipmap. This enables efficient high quality rendering also in combination with programs that do not supply a 4D mipmap to the graphics system.

According the measures of the dependent claims 6 and 7, respectively, the 3D mipmap level can be chosen as the maximum of both 4D mipmap levels, if priority is given to high quality rendering, or as the minimum, if priority is given to reducing memory bandwidth.

According to the measure of the dependent claim 8, also a maximum anisotropy level is taken into consideration when choosing the 3D mipmap level. The dependent claim 9 shows a preferred way of doing so.

To meet an object of the invention, a method of rendering an image for display, includes:

- storing texture maps in a mipmap structure; texels in a texture map being specified by a pair of *u* and *v* coordinates;
- in a rasterization operation determining, for a texel $(u, v)$:

    - corresponding initial 4D mipmap levels ($mml_u$, $mml_v$);
    - a magnification factor representing a magnification that occurs when the texel is mapped to a corresponding pixel position on the display; and
    - corresponding final 4D mipmap levels in dependence on the determined initial 4D mipmap levels $mml_u$, $mml_v$, and the magnification factor;

- in a texture space resampling operation, obtaining texture data for a texture map identified by the final 4D mipmap levels; and
- mapping the obtained texture data to corresponding pixel data defining the display image.

These and other aspects of the invention are apparent from and will be elucidated with reference to the embodiments described hereinafter.

BRIEF DESCRIPTION OF THE DRAWINGS

In the drawings:

Fig.1 shows a graphics pipeline of a forward texture mapping system;
Fig.2 shows a graphics pipeline of an inverse texture mapping system;
Fig.3 shows a 4D mipmap structure;
Fig.4 illustrates reconstruction filtering;
Fig.5 illustrates screen space pre-filtering;
Fig. 6 shows a low quality mipmap selection;
Fig.7 shows a medium quality mipmap selection;
Fig. 8 shows visible mipmap level transitions at low quality mipmap selection; and
Fig.9 shows a block diagram of a computer incorporating the graphics system according to the invention.

DETAILED DESCRIPTION OF THE PREFERRED EMBODIMENTS

**Overview of the system**

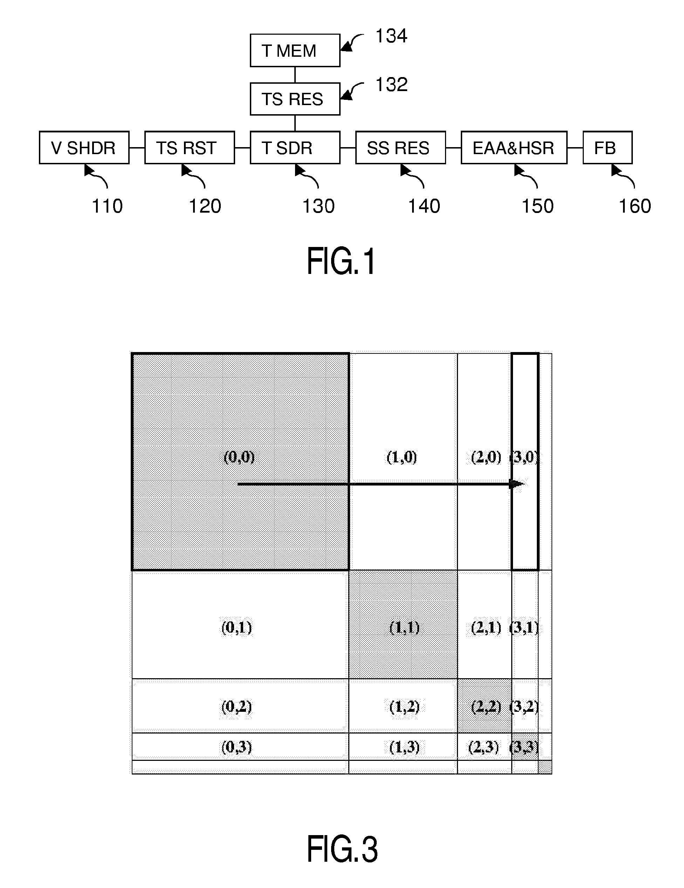

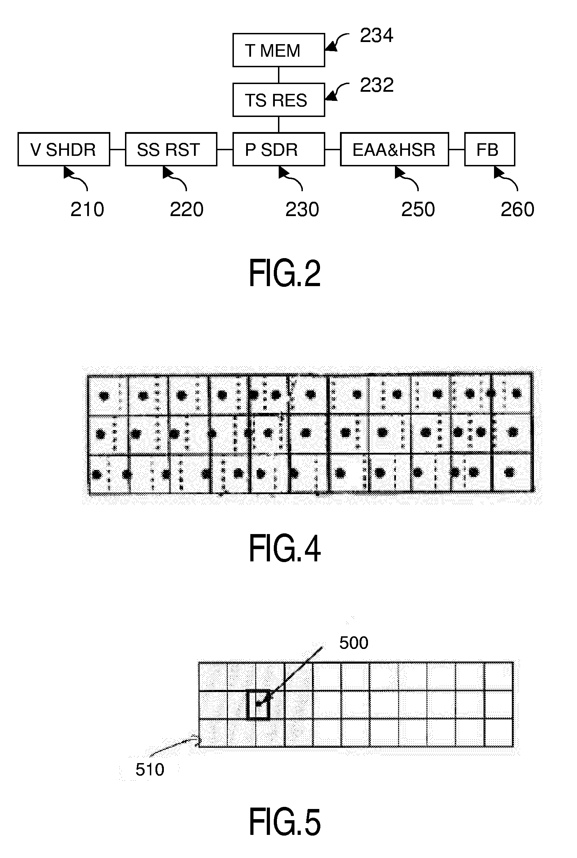

Fig.1 shows an exemplary architecture of the last stages of a graphics pipeline in which the invention may be utilized. Fig.1 shows a forward texture mapping system. Fig.2 shows the last stages of a graphics pipeline of an inverse texture mapping system. In this description it is assumed that the models to be visualized are described using triangles as primitives. Persons skilled in the art can easily apply the same techniques to other primitives, such as other polygons or quads or curved surfaces such as Bezier patches. Input to the pipeline are primitives specified by its vertices by a graphics program, such as a computer game, and the earlier stages of the graphics pipeline. The primitives are given in the screen space, using $(x, y)$ coordinates as well as the respective texel space, using $(u, v)$ coordinates. The pipeline includes a vertex shader 110, texture space rasterizer 120, texel shader 130 with a texture space resampler 132 and texture memory 134, a screen space resampler 140 and an Edge Anti-Aliasing and Hidden Surface Removal (EAA & HSR) unit 150. The outputted pixels are stored in a frame buffer 160 for display, for example using a D/A converter, such as a RAM DAC, to generate analogue output. If so desired also a digital interface, such as DVI, may be used to supply the pixel data to a display. The display may be of any type, including CRT, LCD, plasma display. Alternatively, the rendered picture may also be used as a texture map for subsequent primitives. The functions of the graphics pipeline shown in Figs.1 and 2 will now be described in more detail to illustrate an exemplary system in which the invention may be used.

The vertex shader 110 of Fig.1 and 210 of Fig. 2 receives the vertices of a triangle (primitive) as input and uses a vertex shading program to change or add attributes for each of these vertices. The data provided by the vertex shader usually includes attributes like diffuse and/or specular color, texture coordinates, (homogeneous) screen coordinates, and sometimes extra data like surface normals or other data required for the shading process. The vertex shader may be a traditional Transform and Lighting unit. The attributes generated by the vertex shader are offered to a rasterizer.

The rasterizer 220 of Fig.2 operates in screen space, in a so-called inverse texture mapping system (i. e. pixels from the screen space are mapped to a texture in texture space instead of projecting the texture onto pixels of the screen). Such a rasterizer uses a scanline algorithm to traverse the pixels which lie within the projection of the primitive on the screen, by selecting the screen coordinates from the vertex attributes as driving variables for the rasterization process. The rasterizer thus traverses the primitive over a "screen grid". As coordinates in the screen space are used $x$ (for the 'horizontal' direction) and $y$ (for the 'vertical' direction).

In a preferred embodiment shown in Fig.1, the rasterizer 120 operates in surface space (a so-called forward texture mapping system). The remainder of the description will focus on this preferred embodiment. Persons skilled in the art will be able to apply the principles outlined below equally well to an inverse mapping system. The surface space rasterizer traverses a parameterization of the surface of the primitive (rather than the projection on the screen), by selecting, for example, the texture coordinates (instead of screen coordinates) as the driving variables for the rasterization process.

The rasterizer traverses the primitive over a "surface grid". The grid associated with a texture map provides such a surface grid, and is preferably used as surface grid (since obtaining texture samples on a texture grid does not require resampling). In absence of texture maps, or when for example textures are 1D or 3D, another grid may be chosen. As the coordinates in the texture space are used $u$ (for the 'horizontal' direction) and $v$ (for the 'vertical' direction). It will be appreciated that 'horizontal' and 'vertical' are in this description only relative. For example, the screen may be rotated, leaving the graphics processing unaffected but rotating the output on the screen. Since the texture grid is often used as the surface grid, the notation "texture grid" (and "texture space" and "texel") will be used to denote such generalized grids (and associated spaces and samples). As the rasterizer traverses the texel positions of the grid, all attributes that were given at each vertex are interpolated over the grid (typically linearly, except for the screen coordinates to which a texel is projected, which are interpolated perspectively). The attributes are then available at each texel location, where the texel shader 130 can use them. While traversing the $u$ and $v$ texture coordinates of the base grid, the rasterizer also maintains the corresponding screen coordinates ($x$, $y$) (or vice versa for an inverse mapping system). The correspondence can be maintained by linear interpolation of $\hat{x}$, $\hat{y}$ and $\hat{w}$, where the $\wedge$ denotes homogeneous coordinates. Such coordinates are well-known in the art and will not be described any further here. Screen coordinates can then be calculated using the perspective division $x = \frac{\hat{x}}{\hat{w}}$ and $y = \frac{\hat{y}}{\hat{w}}$. Using screen space resampling based on two 1D resampling passes, the screen $y$ coordinate is only used for mipmap determination purposes, as will be explained in more detail below. Using a one-pass 2D screen space resampler, the $y$ coordinate is also used as input to the resampler. For computing the actual colors, the rasterizer may interpolate diffuse color (RGBA), specular color (RGB) and extra texture coordinate pairs (allowing for multi-texturing). Also other attributes (such as a surface normal) may be interpolated.

In the system according to the invention, the texture space rasterizer traverses the texture map on a grid corresponding to 4D mipmapping, as illustrated in Fig.3. In a 3D mipmap, both directions are downscaled by the same factors. A 3D mipmap is specified by the mipmap level $mml$. The original image is denoted as level 0. In level 1, each entry holds an averaged value of, for example, 2x2 texels. This can be continued until the top-level is reached, which has only one entry holding the average color of the entire texture. Thus, in a square mipmap where subsequent levels are scaled using a factor of two in each direction, level $n$ has one fourth the size of level $n$-1. Other scaling factors may be used as well. In a 4D mipmap the original image is downscaled independently in both dimensions. A 4D mipmap is specified by a horizontal mipmap level $mml_u$ and a vertical mipmap level $mml_v$. Fig.3 shows a 4D mipmap giving details of 16 mipmaps levels (0,0), (1,0), ..., (3,3). The mipmaps levels indicated in gray (0,0), (1,1), (2,2), and (3,3) form the original 3D mipmap levels 0, 1, 2, and 3, respectively. The rasterizer supplies for each texel ($u$, $v$) corresponding 4D mipmap levels ($mml_u$, $mml_v$) to the texel shader 130.

The texel shader 130 computes for each texel the local surface color. The pixel shader 230 of Fig.2 operates in an analogous way. The texel shader operates on the attributes on grid positions in the surface grid and if there are any secondary textures associated with the primitive, it uses inverse mapping with a standard texture space resampler 132 to obtain colors from these. When texture data is needed, the texture space resampler is used to obtain a texture sample given the texture coordinates. These texture coordinates are generated by the texel shader based on the interpolated coordinates received from the rasterizer and any results from previous texture fetches (so-called dependent texturing) and/or calculations. The texture filter operation is usually based on bi-linear or tri-linear interpolation of nearby texels, or combinations of such texture probes to approximate an anisotropic (perspectively transformed) filter footprint. The 2D resampling operations of the texel space resampler is preferably executed in two 1D resample passes using 1D FIR filter structures.

In a preferred embodiment, the texture memory 134 (and 234 of Fig.2) stores texture maps in a 3D mipmap structure. In such an embodiment, the texture space resampler 132 (and 232 of Fig.2) is preferably arranged to on-the-fly reconstruct a desired 4D mipmap from a 3D mipmap as will be described in more detail below. A texture fetch then amounts to 4D mipmap reconstruction from the 3D mipmap data stored in the texture memory 134. In the example of Fig.3, the 4D mipmap (3,0) is reconstructed through downsampling of the 3D mipmap level 0. A fetched texel can be combined with interpolated diffuse and/or specular color resulting in a color sample of the surface with associated (generally non-integer) screen coordinates which indicate where this texture sample is mapped to on screen. Using on-the-fly 4D mipmap reconstruction according to the invention, the texel shader 130 can be seen as a mipmap reconstructor. The texture space resampler obtains texture samples from secondary texture maps, for example, via standard bilinear interpolation. If so desired, this can be extended to trilinear or anisotropic filtering methods, and also support for fetching of 1D and 3D textures can be added (once this has been added the interpolation of the texture coordinates by the rasterizer also needs to be generalized to support a possible third coordinate). Alternatively, the texture memory 134 may store texture maps in a 4D mipmap structure. In such an embodiment, the texel space resampler can simply retrieve the texel data from the specified 4D mipmap. As will be described below, the rasterizer may operate on a more detailed 4D mipmap. If so, the texel space resampler is preferably arranged to reconstruct on-the-fly the more detailed 4D mipmap data for the rasterizer from the lesser detailed 4D mipmap used for the resampling.

The screen space resampler 140 splats mapped texels to integer screen positions, providing the image of the primitive on the screen. The screen space resampling includes the following operations:

- Reconstructing the color information in the texel grid to a continuous signal,
- Mapping the continuous signal from the texture space to the screen space,
- Pre-filtering the mapped continuous signal in screen space, and
- Sampling the pre-filtered signal in screen space.

It will be appreciated that also first the mapping from the texture space to the screen space may be performed, followed by reconstructing the mapped signal. Fig.4 illustrates the mapping and reconstruction filtering using a box as the footprint of the reconstruction filter. Other filters, such as higher order filters may also be used. The figure shows a grid of pixels. Each pixel is shown as a rectangle around the dimensionless location of the pixel. The solid dots illustrate the location of the dimensionless input texel coordinates after the transformation (mapping). The footprints of the original texels are taken and projected onto the screen. The size and location of the footprints of the texel after transformation are shown as the rectangles with dashed lines in Fig.4.

As illustrated in Fig.5, next, each mapped texel is then splat to (i.e. distributed over) pixels in the screen space of which the pre-filter footprint in screen space overlaps with the reconstructed box in the screen space (i.e. after mapping the texel to screen space). The reconstructed box of texel 500 is shown with the highlighted rectangle 510. The pre-filter footprint may extend over several pixels. The filter may extend only horizontally, but may also have a vertical extent. In the example of Fig.5, a filter is used with both a horizontal and vertical extent of three pixels, centered on the pixel to which it belongs and covering two neighboring pixels. In this case, twelve output pixels receive a contribution. For each of those output pixels the contribution is determined by using the shape of their respective pre-filter to weigh the input texel value.

The pixel fragments coming from the screen space resampler are then combined in the Edge Anti-Aliasing and Hidden Surface Removal (EAA & HSR) unit 150 of Fig.1 (and 250 of Fig.2), which uses a fragment buffer 160 of Fig. 1 (and 260 of Fig.2). Pixel fragments are depth-sorted into this buffer to solve the hidden surface problem. After all primitives have been rendered, all visible fragments for each pixel are combined (which mostly amounts to simple summation since the screen space resampler delivers colors already weighted by the pre-filter) and sent to the frame buffer. Edge anti-aliasing results from combining the partial contributions generated by the screen space rasterizer near the edges, resulting in a fmal pixel color which can be a combination of colors from different primitives.

**Adjusting the 4D mipmap level**

For any texture map which provided the rasterization grid, the rasterizer maintains separate horizontal and vertical mipmap levels, which together form a 4D mipmap level index. In the 4D mipmap texel reconstruction process, the rasterizer provides for each rasterization grid position the $u$ and $v$ coordinates for the texel that needs to be fetched, along with the 4D mipmap level ($mml_u, mml_v$) for that texel.

Using mipmaps where successive levels are scaled in each direction by a factor of two, typically a mipmap level is chosen that provides a magnification factor between 0.5 and 1. A magnification factor in a direction is the difference in pixels if the texel is changed by one in that direction (e.g. increased by one). A magnification factor of 1 in both directions for a texel area, roughly corresponds to the situation wherein the texel area has the same number as texels as there are pixels in the area to which it is projected. A magnification factor of 0.5 in both directions, then roughly corresponds to the situation of a texel area with four times the number of texels as there are pixels in the area to which it is projected. A lower magnification than 0.5 makes it better to use a 3D mipmap of a higher level, i.e. with lower resolution (giving sufficient resolution and requiring less bandwidth). For 4D mipmaps, both direction-specific levels can, in principle, be chosen independently.

Using a scaling factor of two (as is normally the case) between mipmap levels, the mipmap level in a direction with a magnification factor $s$ is given by $-^2\log(s)$. Persons skilled in the art will be able to perform a similar mipmap choice for other scaling factors and other numbering of the mipmap levels.

The rasterizer determines for each texel ($u, v$) corresponding initial 4D mipmap levels ($mml_u, mml_v$). In a system wherein the rasterizer uses a fixed mipmap level for the vertical direction (and/or horizontal direction if so desired), the rasterizer determines this initial 4D mipmap level in this direction by determining the magnification factor in this direction in the triangle vertices and choosing the largest magnification factor. So, if for a given direction, in one vertex the magnification factor is 1 and in the other two vertices it is 0.5, it chooses 1 and calculates the mipmap level in that direction as $-^2\log(1)=0$. If the three vertices have twice 0.25 and once 0.5 as magnification factors, this gives $-^2\log(0.5)=1$. The initial 4D mipmap levels determine the grid on which the rasterizer operates. These levels are not necessary the most optimal values for the texture space resampling for each texel within the triangle. Thus if the vertical mipmap level is fixed for operations of the rasterizer and the horizontal mipmap level is variable, the rasterizer once per triangle determines the vertical 4D mipmap level and per texel determines the corresponding horizontal 4D mipmap level. According to the invention, the rasterizer also determines for each texel ($u$, $v$) a corresponding magnification factor representing a magnification that occurs when the texel is mapped to a corresponding pixel position on the display. According to the invention, fmal 4D mipmap levels are determined in dependence on the initial 4D mipmap levels and the magnification factor. The final 4D mipmap levels are used by the texture space resampler. Preferably, the magnification factor is only in the vertical direction, where the rasterizer itself uses a fixed vertical mipmap level per triangle. This is particular advantageous when processing occurs in two 1D scans. The first scan is then, preferably, in the display scan line direction ('horizontal') giving an intermediate image. The second scan then operates on the intermediate image in the other direction. For the first scan, in texture space per scan line the horizontal coordinate $u$ is variable and the vertical coordinate $v$ is fixed per line. The rasterizer provides a value for $mml_v$ that is kept constant across the whole triangle. The value for $mml_u$ is determined per texel. In this way, the rasterizer per texel determines the initial value $mml_u$ that also acts as the fmal value $fmml_u$. The initial 4D level $mml_v$ that is kept constant for operations of the rasterizer is then adjusted per texel to the final value $fmml_v$ for the texture space resampling as described below.

The final vertical mipmap level $fmml_v$ is determined by adjusting $mml_v$ to identify a lower resolution mipmap level if the magnification factor is less than a predetermined threshold and maintaining the determined $mml_v$ mipmap level otherwise. To determine the modification, the rasterizer calculates $\frac{\partial y}{\partial v}$, which indicates the magnification factor for the second pass (which maps $v$ values to $y$ values). This value indicates based on the currently selected rasterization grid position how far apart on the screen two texels are that differ one in $v$ value in the vertical rasterization mipmap level $mml_v$. Because of the choice of $mml_v$, this is at most 1 pixel spacing, but it can be considerably less because of the variation in minification across the triangle, and because shear reduction might have refined the rasterization grid vertically. Using scaling by a factor of two, the threshold is preferably ½. Persons skilled in the art will be able to determine optimal thresholds for other scaling factors. Thus, if $\frac{\partial y}{\partial v}$ is smaller than ½, a coarser 4D mipmap level $mml_v$ may be chosen than one would assume on the initial $mml_v$ (and still have an effective screen pixel spacing between ½ and 1 for subsequent rows in the fetched 4D mipmap level $mml_v$). More precisely, $\frac{\partial y}{\partial v}$ determines a mipmap level difference

$$\Delta mml_v = {}^2\log\left(\frac{\partial y}{\partial v}\right)$$

which can be added to $mml_v$ to arrive at the vertical 4D mipmap level which is really needed to supply the proper amount of detail for a particular rasterization grid location. This gives the final mipmap level $fmml_v = mml_v + \Delta mml_v$. Preferably, the rasterizer in addition to the initial 4D mipmap levels provides the vertical magnification factor per texel. The calculation shown above to determine the final vertical 4D mipmap level may then be done by the texture space resampler, but it may also be done by another unit of the system. It will be appreciated that above description for a preferred embodiment is for a vertical magnification. Other systems may use the same principle in the horizontal direction or in both directions. Using the technique described above, optimal 4D mipmap levels are chosen for resampling despite rasterizing over a finer grid at some locations in the triangle. So although this finer rasterization costs more processing power, memory bandwidth required for fetching texture maps is not affected.

The final 4D mipmap levels can be used by the texture space resampler to fetch texture data from the specified 4D mipmap, if the texture memory stores a full 4D mipmap structure. The final 4D mipmap may be of lower resolution than the initial 4D mipmap used by the rasterizer. To save bandwidth, the higher resolution 4D mipmap may on-the-fly be reconstructed from the lower resolution 4D mipmap, using interpolation.

### Selecting the 3D mipmap level for 4D mipmap reconstruction

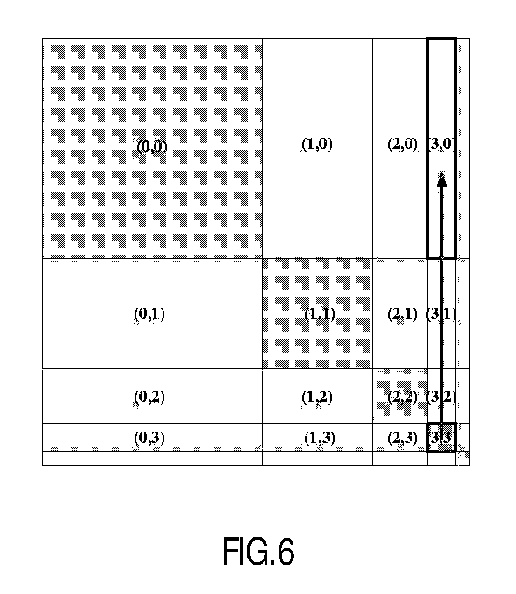

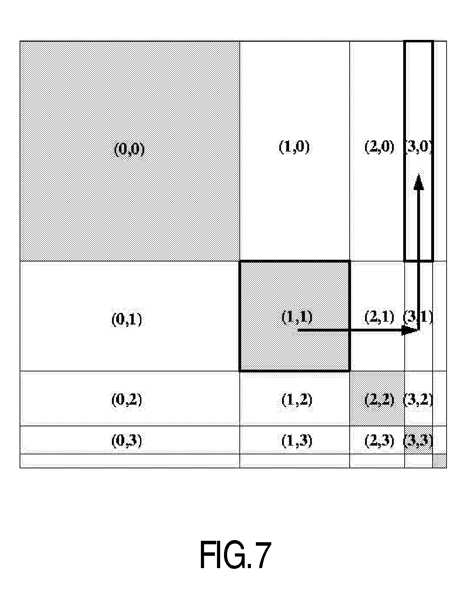

Since applications usually deliver textures only in standard 3D mipmap representation, in a preferred embodiment for any texture map which provided the rasterization grid on-the-fly 4D mipmap reconstruction from a 3D mipmap is applied. The texel shader acts then as a 4D mipmap reconstructor. As described above, the rasterizer maintains separate horizontal and vertical mipmap levels, which together form a 4D mipmap level index. In the 4D mipmap texel reconstruction process, the rasterizer according to the invention provides for each rasterization grid position the $u$ and $v$ coordinates for the texel that needs to be fetched, along with the vertical magnification factor (or even the final 4D mipmap levels ($mml_u$, $fmml_v$)) for that texel. The 4D reconstruction unit needs to determine a 3D mipmap level $mml$ from which to fetch texels which can be filtered to provide a sample at the requested coordinates ($u$,$v$). A 3D mipmap level $mml$ corresponds to 4D mipmap level ($mml$, $mml$), and these are drawn as the shaded squares in Figs 3, 6 and 7. From these, the samples in the off-diagonal mipmap levels need to be generated. The figures show how a texel for 4D mipmap level (3,0) can be generated from 3D mipmap level 3 using magnification (Fig.6), or from 3D mipmap level 0 using minification (Fig.3), or from a level in between (Fig.7). Given a (possibly adjusted as described above) 4D mipmap level ($mml_u$, $fmml_v$) provided by the rasteriser for a texel sample, a function is required which determines the 3D mipmap level $mml$ to be used to address the texture memory. The following three alternatives are described here in more detail, providing different quality/performance trade-offs.

In a low quality setting, as illustrated in Fig.6, the 3D mipmap level corresponding to the coarsest of the two 4D mipmap levels is chosen. This level is then magnified in the other direction (yielding vagueness in that direction) to arrive at the 4D mipmap level texels. The magnification is preferably obtained using linear interpolation or, if so desired, higher order filters. The advantage is that a minimum amount of 3D texels is fetched, and texture caching can be employed to re-use texture samples for generation of subsequent 4D mipmap level texels (since many 4D mipmap samples are generated between the same 3D mipmap level samples). The 3D mipmap level selection formula corresponding to this alternative is:

$$mml=\text{MAX}(mml_u, fmml_v).$$

In a high quality setting, as illustrated in Fig. 3, the 3D mipmap level corresponding to the finest of the two 4D mipmap levels is chosen. This level is then minified in the other direction to arrive at the 4D mipmap level texels. The advantage is that maximum quality and sharpness is maintained. But this comes at the cost of possibly many texel fetches for each 4D mipmap level texel that needs to be generated. The generated texel is preferably the unweighted average of the fetched texels (higher order filters may be used as well). The 3D mipmap level selection formula corresponding to this alternative is:

$$mml=\text{MIN}(mml_u, fmml_v).$$

In a medium quality setting, as illustrated in Fig.7, a compromise between the low and high quality setting is chosen. In a preferred embodiment, this setting is controlled by a parameter $a$ (maximum anisotropy level) which allows for some (expensive) minification (as with the high quality setting), but at most $a$ mipmap levels. This means that at most $2^a$ texels are combined in one direction. Any larger difference between the horizontal and vertical mipmap levels is bridged using an approach similar to the low quality setting. This option is illustrated in Fig.7 for the preferred setting $a$=2. Setting $a$ to 0, results in the low quality setting, while setting $a$ very large results in the high quality setting. The 3D mipmap level selection formula corresponding to this alternative is:

$$mml=\text{MAX}(\text{MAX}(mml_u, fmml_v)-a, \text{MIN}(mml_u, fmml_v)).$$

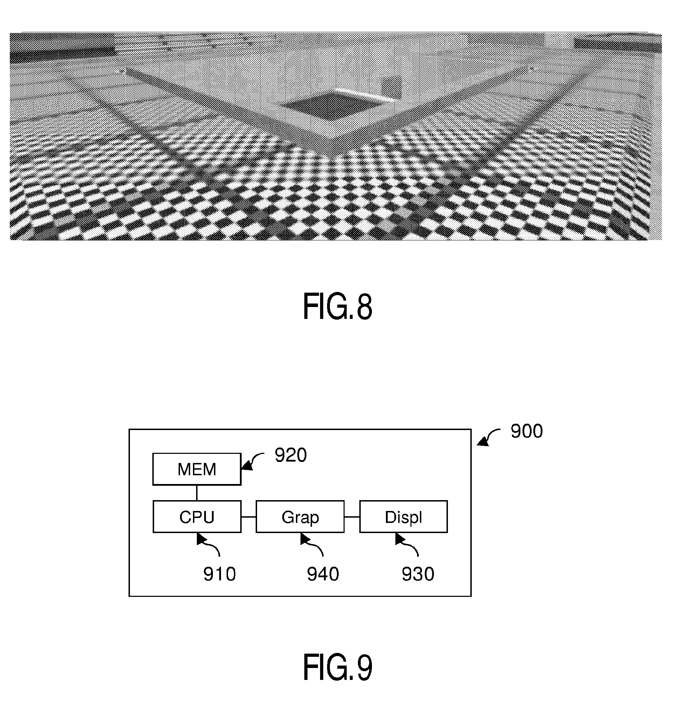

The lower quality settings (allowing only very limited anisotropy level) may result in artefacts, as is shown in Fig.8. Textures which are viewed from an angle become blurry (as with traditional non-anisotropic filtering), but since we discretely switch between mipmap levels when using bilinear texture filtering, jumps in blurriness become visible. Because of the per-texel 3D mipmap level selection, these lines move along with the movements of the viewer (they are not fixed to triangle edges). If bandwidth needs to be limited using the lower quality options, something like tri-linear filtering (blending between mipmap levels) can be incorporated to make the transitions gradual. However for the high quality setting (or for a reasonable allowed anisotropy level in the medium setting, say $a$=3) this is unwanted, because at those settings we have enough detail, and do not want the additional blurring caused by trilinear filtering.

Note that the value assigned to $mml$ by the calculations described above, has to be clipped to the range of values for which mipmap levels are available (to exclude for example negative values of $mml$) and transformed to the integer levels used to indicate the mipmap level in memory. This may be done in any suitable way, e.g. by rounding or truncating. The remaining fraction is preferably used for trilinear filtering. The moment of rounding may be chosen. Preferably, the final value of $mml$ is rounded, where $mml$ is for example determined in one of the three approaches described above. If so desired also $\Delta mml_v$ may be rounded immediately when it is determined, e.g by rounding down

$$\Delta mml_v = \left\lfloor {}^2\log\left(\frac{\partial y}{\partial v}\right) \right\rfloor.$$

Fig.9 shows a block diagram of a computer 900, including a central processing unit 910, a memory 920, a display 930, and a computer graphics system 940 according to the invention. The computer may be a conventional computer, such as a personal computer, games console or workstation. The computer graphics system may be implemented using a graphics processor. Such a graphics processor may be operated under control of a program causing the graphics processor to execute the method according to the invention. The program may be fixedly embedded (e.g. in ROM), but may also be loaded from a background memory. In the latter case, the program may be distributed in any suitable form, e.g. using a record carrier, such as a CD-ROM, or wired or wireless communication means, such as Internet.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1.  A computer graphics system for rendering an image for display, including:

    - a texture memory (134) for storing texture maps in a mipmap structure; texels in a texture map being specified by a pair of $u$ and $v$ coordinates;
    - a rasterizer (120) operative to, for a texel ($u, v$),

        - determine corresponding initial 4D mipmap levels ($mml_u$, $mml_v$);
        - determine a magnification factor representing a magnification that occurs when the texel is mapped to a corresponding pixel position on the display; and
        - determine corresponding final 4D mipmap levels in dependence on the determined initial 4D mipmap levels $mml_u$, $mml_v$, and the magnification factor; and

    - a texture space resampler (132) for obtaining texture data from a texture map identified by the pair of final 4D mipmap levels;
    - a texture mapper (140) for mapping the obtained texture data to corresponding pixel data defining the display image.

2.  A computer graphics system as claimed in claim 1, wherein the magnification factor represents a magnification in a vertical direction indicated by coordinate v.

3.  A computer graphics system as claimed in claim 2, wherein the rasterizer is operative to determine a final vertical 4D mipmap level $fmml_v$ by adjusting $mml_v$ to identify a lower resolution vertical 4D mipmap level if the magnification factor is less than a predetermined threshold and maintaining the determined $mml_v$ mipmap level otherwise.

4.  A computer graphics system as claimed in claim 1, wherein:

    - the texture memory is arranged to store the texture maps in a 4D mipmap structure; each texture map being identified by a pair of 4D mipmap levels;
    - the texture space resampler is operative to on-the-fly reconstruct at least part of a texture map of a 4D mipmap identified by the pair of initial 4D mipmap levels from a texture map of a 4D mipmap in the texture memory identified by the pair of fmal 4D mipmap levels for use by the rasterizer.

5.  A computer graphics system as claimed in claim 1, wherein:

    - the texture memory is arranged to store the texture maps in a 3D mipmap structure; each texture map being identified by a respective 3D mipmap level $mml$;
    - the texture space resampler is operative to on-the-fly reconstruct at least part of a texture map of an identified 4D mipmap from an associated 3D mipmap with level $mml$ in the texture memory.

6.  A computer graphics system as claimed in claims 3 and 5, wherein the 3D mipmap level $mml$ of the associated 3D mipmap is given by MAX($mml_u$, $fmml_v$).

7.  A computer graphics system as claimed in claims 4 and 5, wherein the 3D mipmap level $mml$ of the associated 3D mipmap is given by MIN($mml_u$, $fmml_v$).

8.  A computer graphics system as claimed in claims 4 and 5, wherein the 3D mipmap level $mml$ of the associated 3D mipmap is determined in dependence on a predetermined maximum anisotropy level $a$.

9.  A computer graphics system as claimed in claim 8, wherein the 3D mipmap level $mml$ of the associated 3D mipmap is given by MAX(MAX($mml_u$, $fmml_v$)-$a$, MIN($mml_u$, $fmml_v$)).

10. A computer including a central processing unit, a memory, a display, and a computer graphics system as claimed in claim 1.

**11.** A method of rendering an image for display, including:

- storing texture maps in a mipmap structure; texels in a texture map being specified by a pair of $u$ and $v$ coordinates;
- in a rasterization operation determining, for a texel $(u, v)$:

  - corresponding initial 4D mipmap levels $(mml_u, mml_v)$;
  - a magnification factor representing a magnification that occurs when the texel is mapped to a corresponding pixel position on the display; and
  - corresponding final 4D mipmap levels in dependence on the determined initial 4D mipmap levels $mml_u$, $mml_v$, and the magnification factor;

- in a texture space resampling operation, obtaining texture data for a texture map identified by the final 4D mipmap levels; and
- mapping the obtained texture data to corresponding pixel data defming the display image.

**12.** A computer program operative to cause a processor to perform the method of claim 11.

FIG.1

FIG.3

```
                          ┌─────────┐
                          │  T MEM  │◄─── 234
                          └────┬────┘
                          ┌────┴────┐
                          │ TS RES  │◄─── 232
                          └────┬────┘
┌────────┐   ┌────────┐   ┌────┴───┐   ┌─────────┐   ┌────┐
│ V SHDR │───│ SS RST │───│ P SDR  │───│ EAA&HSR │───│ FB │
└────────┘   └────────┘   └────────┘   └─────────┘   └────┘
    ▲            ▲             ▲            ▲            ▲
   210          220           230          250          260
```

## FIG.2

## FIG.4

## FIG.5

| | | | |
|---|---|---|---|
| (0,0) | (1,0) | (2,0) | (3,0) |
| (0,1) | (1,1) | (2,1) | (3,1) |
| (0,2) | (1,2) | (2,2) | (3,2) |
| (0,3) | (1,3) | (2,3) | (3,3) |

# FIG.6

FIG.7

FIG.8

FIG.9

## EUROPEAN SEARCH REPORT

**European Patent Office**

**Application Number**

EP 03 10 1961

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | K. MEINDS, B. BARENBRUG: "Resample Hardware for 3D Graphics" GRAPHICS HARDWARE (EUROGRAPHICS WORKSHOP PROC.), 2002, pages 17-25, XP002259239 | 1,10-12 | G06T15/20 |
| A | * abstract * * chapter 6 * | 2-9 | |
| A | T. MCREYNOLDS, D. BLYTHE, B. GRANTHAM, S. NELSON: "Programming with OpenGL: Advanced techniques" COURSE 17 NOTES AT SIGGRAPH '98, [Online] 1998, XP002259240 Retrieved from the Internet: <URL:http://www.sgi.com/software/opengl/advanced98/notes> [retrieved on 2003-10-24] * chapter 5.4 * | 1-12 | |
| A | K. MEINDS, B. BARENBRUG, F. PETERS: "Hardware-accelerated Texture and Edge Antialiasing using FIR-Filters" ACM SIGGRAPH 2002, CONFERENCE ABSTRACTS AND APPLICATIONS, 2002, page 190 XP002259241 * the whole document * | 1-12 | **TECHNICAL FIELDS SEARCHED (Int.Cl.7)** G06T |
| A | SHIRMAN L ET AL: "A new look at mipmap level estimation techniques" COMPUTERS AND GRAPHICS, PERGAMON PRESS LTD. OXFORD, GB, vol. 23, no. 2, April 1999 (1999-04), pages 223-231, XP004165786 ISSN: 0097-8493 * the whole document * | 1-12 | |

-/--

The present search report has been drawn up for all claims

| Place of search | Date of completion of the search | Examiner |
|---|---|---|
| MUNICH | 27 October 2003 | Engels, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

| | European Patent Office | EUROPEAN SEARCH REPORT | Application Number EP 03 10 1961 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EWINS J P ET AL: "Implementing an anisotropic texture filter" COMPUTERS AND GRAPHICS, PERGAMON PRESS LTD. OXFORD, GB, vol. 24, no. 2, April 2000 (2000-04), pages 253-267, XP004236371 ISSN: 0097-8493 * chapter 3 * | 1-12 | |
| A | EP 0 447 227 A (HEWLETT PACKARD CO) 18 September 1991 (1991-09-18) * abstract * * figure 3 * | 1-12 | |
| A | PAUL S HECKBERT: "Fundamentals of Texture Mapping and Image Warping" TECHNICAL REPORT UCB/CSD 89/516, XX, XX, 17 June 1989 (1989-06-17), pages 1-85, XP002250390 * page 60 - page 62 * | 1-12 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 27 October 2003 | Engels, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

**ANNEX TO THE EUROPEAN SEARCH REPORT
ON EUROPEAN PATENT APPLICATION NO.** EP 03 10 1961

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2003

| Patent document cited in search report | | Publication date | Patent family member(s) | | Publication date |
|---|---|---|---|---|---|
| EP 0447227 | A | 18-09-1991 | US | 5222205 A | 22-06-1993 |
| | | | DE | 69130132 D1 | 15-10-1998 |
| | | | DE | 69130132 T2 | 28-01-1999 |
| | | | EP | 0447227 A2 | 18-09-1991 |
| | | | JP | 4222071 A | 12-08-1992 |

EPO FORM P0459

For more details about this annex : see Official Journal of the European Patent Office, No. 12/82